# EUROPEAN PATENT APPLICATION

(11) **EP 2 075 609 A1**
(43) Date of publication of application: **01.07.2009**
(21) Application number: 07255078.3
(22) Date of filing: 28.12.2007
(51) Int. Cl.: G02B 6/44, H02G 1/08

(54) **Cable installation detection using air flow**

(71) Applicant: British Telecommunications public limited company, 81 Newgate Street London EC1A 7AJ (GB)
(72) Inventor: The designation of the inventor has not yet been filed
(74) Representative: Sayer, Robert David

(57) **Abstract**

A device for use with a conduit having a first conduit end and a conduit second end, into which conduit a cable (2) can be installed using a flow of air (3) into the first conduit end, the device being suitable for confirming that the air is flowing out from the second conduit end, the device comprising
- a housing (20),
- means to enable connection of the device to the second conduit end,
- a detector (22) arranged to detect an acoustic property change caused by generation of a tone having a first pitch, and
- an actuator (26), for causing the acoustic property change detectable by the detector,
wherein in use, a change in the flow of air causes the actuator to generate an acoustic property change detectable by the detector.

## Description

The present invention relates to the installation of cables, such as optical fibre units, wires, electrical cables or the like. More specifically, but not exclusively, the present invention relates to the blowing of fibre unit cables through pre-laid conduits.

Optical fibres are widely used within telecommunication systems for high-speed information transfer, particularly in the core or backbone network. With the advent of fibre to the premises (FTTP), the conduits will further extend to and into commercial and residential premises. Indeed it is a fundamental part of the push to FTTP in e.g. the UK, that substantially all the network comprises optical fibre, extending from the core network to as many end customers, both commercial and residential, as possible. This involves the installation of millions of kilometres of optical fibre across the network, especially at the local access level which had previously been served by copper. To achieve widespread take-up, the optical fibre installation process needs to be speedy, cost- and effort-efficient.

An optical fibre unit, which could comprise a single optical fibre, or a bound bundle of typically 2 to 24 optical fibres, can be installed using what is known as the "blown fibre" method, described in EP108590. In this method, a fibre unit is propagated along a hollow tube pre-laid along the desired route, where compressed air is fed, or "blown" into the mouth of the tube. The viscosity of the flow of air travelling along inside the tube, together with the friction on the outer surface of the fibre unit, help to carry the fibre unit along the length of the tube.

The tubes or conduits typically are made of plastic, each with a typical inner diameter of 2.5 to 6 mm or more, and are usually provided in a bound bundle comprising up to 24 or more tubes, which are held together within a protective outer sheath. The tubes usually comprise a continuous span between convenient access points such as surface boxes, inspection chambers down man holes, or near telephone poles. Each fibre conduit tube can receive at least one fibre unit comprising one or more individual optical fibres. Large numbers of tube conduits - and bundles of conduits - are pre-installed across the access network and the distribution network between the local exchanges and the customer premises, typically to locations which may require a future fibre connection.

When it is decided to populate these pre-installed tubes, the fibre cable or unit is installed in each tubular span by blowing it down the conduit from one end; alternatively the unit could be blown down a concatenation of spans in a single step if circumstances permit. This is repeated for each span, or concatenation of spans, until a continuous fibre path has been laid between the end points of the whole route.

A tubular path can be described between two access points, which may be hundreds of metres apart, by a single length of conduit tube. The conduit path may alternatively comprise a number of lengths of physically separate conduit tubes which are connected together e.g. in series. Either way, it is crucial to choose the correct conduit path during installation, so that the fibre unit emerges at the desired destination end. During installation however, the operator at one of the installation points would be presented with a large and potentially confusing number of conduit tube openings, each representing a path leading to a destination. The tube openings are usually mapped to their destinations e.g. by colour-coding. If however the tube openings are wrongly mapped, or the records otherwise inaccurate, mistakes can result in attempts to identify the correct conduit path and the correct tube opening leading to the desired destination. This is especially so if the working conditions are poor e.g. in adverse weather up a telephone pole or down a manhole or in poor lighting.

Where the path comprises a number of tube lengths connectorised together, yet another problem may lie in broken connections between lengths of conduit tubes within the network, so that the fibre unit may get lost within the system during installation and never emerge at the destination. Yet another issue may be the possibility that the fibre unit may, during installation, could be impeded by an imperfect connection or a tight bend or some other source of friction in the conduit, and again never emerge at the destination.

For any of these or other reasons, the fibre unit may, during installation, emerge in the wrong place, or in an extreme case, not at all. Add to that some uncertainty about the exact length of the conduit route down which the fibre unit is being installed, so that the operator may not even know in a timely manner when something has gone wrong.

The current response to this problem is to use two operators during installation, one at each end of the installation conduit path. The second operator at the destination end of the tubular path is required because the destination or remote end is often some distance away - up to a kilometre or more - from the head end. The operator at the head end is therefore unable to know the status of the remote end during an installation without a second operator located there reporting the status back to the head end.

During a typical installation session, the first operator situated at the head end of the conduit fits a protective slug or bead on the tip of the fibre unit, then feeds this and compressed air into the mouth of the conduit with fibre installation apparatus - known in the art as a "blowing head" which is described in general in e.g. WO88/00713. Meanwhile the second operator locates himself at the desired end point of the fibre installation. The process commences by directing compressed air into the mouth of the head end conduit. If the air is directed into the correct conduit so that the tubular path leads to the desired destination, the remote end operator can eventually sense the arrival of the air with an airflow meter temporarily connected to the end of the conduit, or more simply by feeling the airflow exiting the conduit against his hand if the airflow is sufficiently high. He then communicates this to the head end operator by radio or other means, to confirm to the head end operator that the air is applied to the correct conduit. The head end operator upon receiving the news, then blows the fibre unit into the conduit through to the remote end, whereupon the remote end operator advises his colleague on its arrival. The head end operator then turns off the air supply and the blowing head, and the installation process is complete.

This process is labour-intensive as two operators must work on a single installation. This is in turn drives up the overall cost of optical fibre installation, a problem now especially significant in the FTTP context with the considerable installation volumes involved.

Various methods requiring only a single operator installation of blown fibre have been developed, to obtain a significant saving in manpower and cost requirements. In the simplest method, the length of the conduit route is known, allowing the operator to know that the fibre has (probably) arrived at the remote end when the required length of fibre unit has been played out. This relies on the map record of conduit route being up to date and accurate, and presumes a completely smooth and obstruction-free conduit route. Neither of these can be guaranteed in practice.

Another known practice is to install at the remote end of the conduit a barrier of porous material such as an "airstone" which is constructed of a porous material which allows air through but which will stop further progress of the fibre unit. The airstone is temporarily placed at the mouth of the destination remote end of the tube conduit. When the fibre ceases to travel down the tube, this is an indication that the far end of the fibre may have reached the destination end and has been retained by the airstone barrier. However, lack of further progress is ambiguous as to whether the fibre unit has indeed reached the porous airstone at the destination end, or if instead the fibre unit is caught on an obstruction at some intermediate point along the length of the conduit.

These, together with other methods like those described in WO9103756 or WO/9812588, also describe how fibre arrival can be detected by the single operator at the head end of the installation; the initial step of detecting that the compressed air fed into the head tube end is not addressed in the above techniques.

One method, developed by the applicants of the present case and described in WO2006/103419 does describe a device which permits the detection of the arrival of both air as well as the remote end of the fibre unit at the opening of the remote tube end. The device uses a low-mass wind vane which rotates in the presence of airflow, and which rotation is stopped when the fibre end arrives and gets "caught" in the blades of the wind vane. The change in status of the wind vane can be captured as indicia of air or fibre arrival.

In general, the present invention provides methods and devices for aspects relating to the installation of cables such as optical fibre units into conduit tubes using e.g. the blown fibre method, so that in particular, a single operator can operate substantially on his own at one end, to determine if compressed air and/or the fibre unit fed into a conduit has reached its intended destination. The invention can be used where the operator has to choose between one of a number of conduits, or where there is a single conduit but where it is desirable to unambiguously confirm that the air and/or the fibre unit will reach or reaches the intended destination. In view of the possible volumes that may be deployed in FTTP initiatives, the invention also addresses the need for cost-efficiency in being relatively cheap to manufacture and to simple operate.

A first aspect of the present invention provides a device for use with a conduit having a first conduit end and a conduit second end, into which conduit a cable can be installed using a flow of air into the first conduit end, the device being suitable for confirming that the air is flowing out from the second conduit end, the device comprising
- a housing,
- means to enable connection of the device to the second conduit end,
- a detector arranged to detect an acoustic property change caused by generation of a tone having a first pitch, and
- an actuator for causing the acoustic property change detectable by the detector,
wherein in use, a change in the flow of air causes the actuator to generate an acoustic property change detectable by the detector.

In the described embodiment of the invention, the actuator is a whistle arrangement, and the detector is a vibration sensing device, such as a microphone. Further preferred implementations of the invention further permit the detection of fibre arrival with the same device. In the detection of fibre arrival, the bead fixed on the leading end of the fibre unit can either be used to change the tone or pitch (up or down) of the whistling sound produced as a result of an airflow through the sensor device.

Acoustic properties which changes can be detected for the purposes of the invention include frequency, pitch, volume, and so on.

Alternatively, the whistle can be silenced by depriving it of airflow at the far end. In preferred embodiments, this is achieved by using the bead itself to block the further passage of air though the device housing to the whistle arrangement.

In a second aspect of the invention, there is provided a system for use with a conduit having a first conduit end and a conduit second end, into which conduit a cable can be installed using a flow of air into the first conduit end, comprising a device for confirming that the air is flowing out from the second conduit end according to any preceding claim.

The blown fibre apparatus at the head end - which essentially comprises a blowing head and an air compressor - can be configured to respond to a signal from the remote end by automatically moving the process to the next stage e.g. the start of the fibre installation stage (upon confirmation of airflow at the far end) or the turning off of the apparatus (upon confirmation that the fibre unit has safely arrived).

In a further aspect of the invention, there is provided a method for use with a conduit having a first conduit end and a conduit second end, into which conduit a cable can be installed using a flow of air into the first conduit end, and to confirm that the air is flowing out from the second conduit end, the method comprising
- attaching a device of any one of claims 1 to 9 to the second conduit end,
- applying the flow of air into the first conduit end,
- causing a acoustic frequency change, and
- detecting the acoustic frequency change.

Preferred embodiments of the invention will now be described, by way of example only, with reference to the accompanying drawings, in which:
Figure 1A and 1B depict a sensor device of the invention in use during airflow and fibre arrival detection;
Figures 2A, 2B and 2C depict an alternative embodiment of the invention;
Figures 3A and 3B depict another alternative embodiment of the invention;
Figure 4 depicts the main components of apparatus used in a blown fibre installation at the head end;
Figure 5 depicts a device of the invention of Figures 1A and 1B and its enclosure;
Figure 6 depicts a device of the invention of Figures 3A and 3B and its enclosure; and
Figure 7 depicts a device of the invention of Figures 1A and 1B with an alternative enclosure.

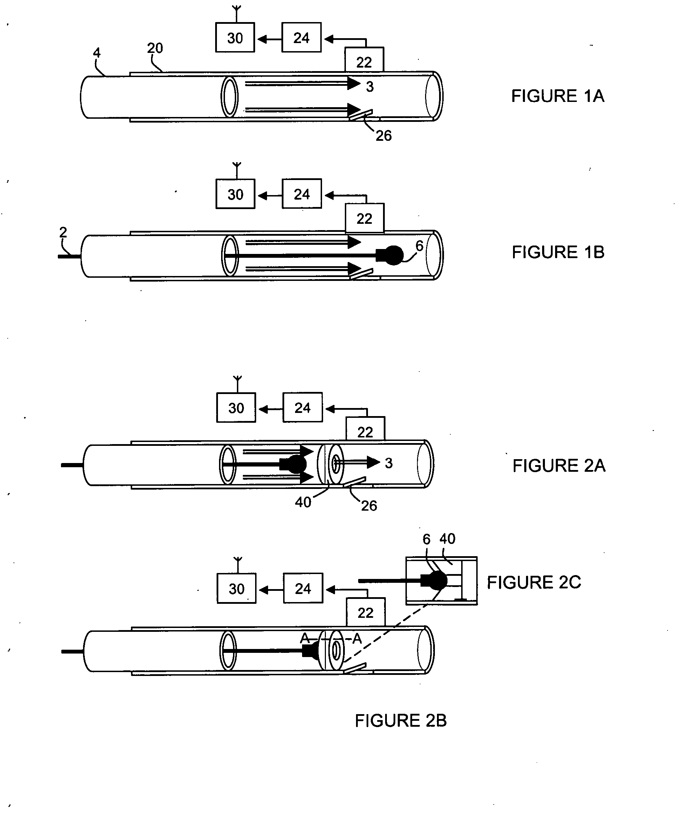

Figures 1A and 1B depict a first embodiment of the invention. It comprises a substantially cylindrical or tubular housing (20) which is open at both ends. A first open end is configured to connect with the mouth of the optical fibre tube at the remote end of the installation e.g. in a friction fit. The housing is fabricated from a non-metallic material, such as an injection-moulded plastic, which is relatively simple and cheap to manufacture.

The housing includes a tongue/aperture construction (26) configured to introduce turbulence in air flowing past the construction such that the air vibrates - in short, the housing includes a whistle arrangement (26). A microphone (22) or other device capable of detecting the whistling sound or acoustic property of the vibrating air is provided in the sensor device, preferably at a position which allows for easy pick up of the vibrations. Where necessary, the microphone is connected to an amplifier (24) to boost the acoustic signal, and a processor (also 24) for filtering and "cleaning up" the signal by identifying and discarding detected acoustic data not related to the isolating of the signal from the whistling sound. The processor is connected to a radio frequency (RF) transmitter (30).

The use of the sensor device to sense a flow of air (3) from the mouth of the conduit at the remote or far end of a blown fibre installation will now be described in connection with Figure 1A. At the start of the installation operation, the operator travels to the remote or destination end of the installation, and connects the above sensor device to the mouth of the conduit from which it is hoped that the compressed air fed from the head end, will emerge. The device is powered on. The housing should fit snugly to the conduit end to ensure that minimum air leakage occurs at the junction between the conduit and the device housing. At this point, no air has yet been fed into the conduit or tube, so within the conduit, at the remote conduit end, and within the housing of the sensor device, the air pressure is at a steady state level and air flow is zero. In particular, the whistle arrangement in the sensor is substantially silent in this state.

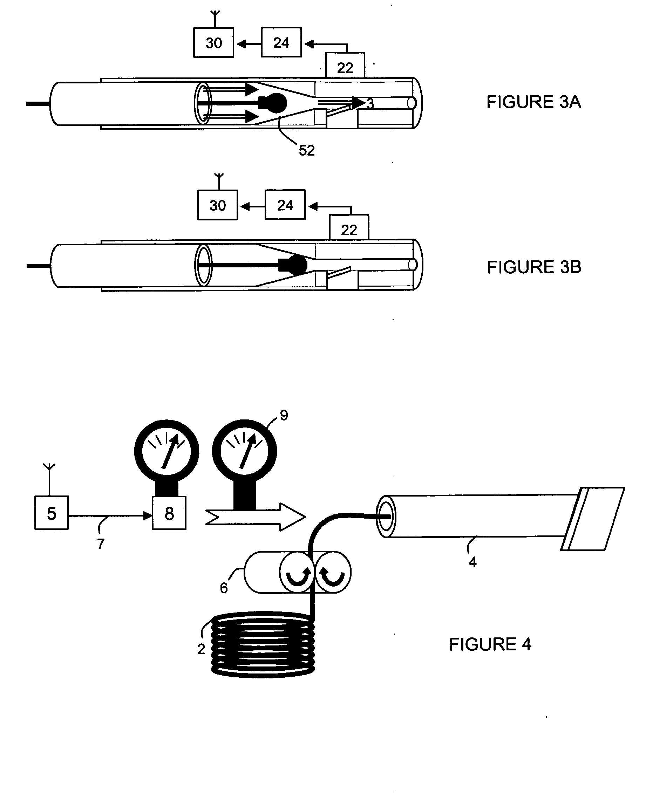

The operator returns to the head end of the installation and selects a conduit which hopefully represents the start of the conduit path which terminates at the conduit end on which the device had been placed. He then starts the installation process using the apparatus shown in Figure 4 i.e. a compressor and a blowing head, to direct compressed air and the fibre unit into the conduit.

If the correct conduit (4) has been selected, air (3) flows through the conduit and out into the sensor device housing (20). As the air travels through the bore of the device housing, it passes the tongue/aperture of the whistle arrangement (26) which results in the generation of an acoustic sound or tone. The precise properties of the tone generated by the airflow are not crucial to the invention, although it may be expected that, since the air flow expected at the remote end can be anticipated from the air pressure present at the head end (e.g. up to 10 bar), the pitch/frequency of the expected tone may be calculated. In any case, it is noted that in general, the tones produced by whistles tend to be relatively independent of air pressure borne on the whistle tongue/aperture.

The generated tone indicating the presence of the airflow is, in this exemplary implementation, relatively constant in pitch and intensity over the range of airflows likely to be encountered in practice. This tone is, where necessary, amplified, and then processed by the processor (24) to produce a simple status indication where
status 0 = no tone is detected; and
status 1 = a tone of pitch X is detected.

In practice, status 0 where "no tone is detected" may include background noise such as environmental sounds and traffic noise, which may be picked up depending on the sensitivity of the microphone. The pitch "X" of status 1 spans a range of possible frequencies which is detectable as a recognisable tone, the precise frequency in practice depending on many factors such as the design of the tongue/aperture, the bore of the sensor housing, and so on. Although the frequency of the tone may vary slightly between different sensors because of these variable factors, for a single sensor the frequency of the tone is substantially constant for the range of air flows likely to be encountered.

The only requirement for the invention is that the generated tone "X" is distinguishable from the tone detected by the microphone (22) in the sensor device's state 0. There may therefore be an advantage if the generated whistle tone be one in the middle/upper audio range to distinguish it sufficiently from background noise. Ultrasonic frequencies could also be used, with the advantage that they will not be heard by passers by or attract unwanted attention to the unmanned remote location.

The detected status indication is then conveyed to the operator at the head end via the radio channel (30). Upon receiving the transmitted signal for status 1, the operator can then be sure that he has selected the correct conduit for feeding the compressed air in, and moreover that the conduit path to the destination remote end is not broken and is free from obstructions.

Of course, if the operator did not feed the air down the correct conduit, none of the above will occur. In such a case, the operator will realise, from not receiving any signal from the remote end after a suitable time period, that something is amiss. He can then take appropriate steps e.g. select another conduit end to connect to the air compressor. He will at least be aware that the fibre unit should not be installed into the first-chosen tube.

The use of the device to further sense the arrival of a fibre unit fed into the mouth of the conduit at the remote or far end of a blown fibre installation will now be described.

First, at the head end, a supply of fibre unit is prepared by crimping or otherwise attaching a slug or a bead (6) to the tip of one end, which protects the fragile glass fibre from damage. The bead typically has a rounded end which eases the fibre unit's progress through the conduit path. It is often made from brass as a preferred material as it does not rust. After the operator at the head end receives confirmation by RF or by e.g. a short message service text message that air is flowing from the desired destination conduit, a fibre unit (2) is fed into the same conduit (4) into which the compressed air is being fed.

Referring now to Figure 1B, the fibre unit (2) led by the bead (6) advances out of the conduit opening at the remote end, into and through the housing of the device as shown in Figure 1B. As the fibre cable advances along the conduit during ingress, the airflow in and through the bore of the sensor device may be slightly disturbed, particularly when the bead on the leading end of the cable first emerges from the conduit. That in turn may result in the detection of the sound of the airflow and movement within the device. However, these signals can be discounted using various techniques, e.g. by using a distinctive tone signature which positively indicates fibre arrival, as discussed below.

The bead advances along the device housing so that it eventually passes over the whistle tongue/aperture, causing a change to the tuning of the whistle's resonant cavity to pitch "Y" (where pitch "Y" is again one in a range of possible discrete pitches which the system treats as being indicative of the presence of the bead in the vicinity of the whistle). Depending on the design of the sensor device and the whistle, the tuning pitch may shift up or down when the bead passes over the whistle tongue/aperture: again, the exact properties of the shift are not important, as long as pitch "Y" (which indicates the arrival of the fibre unit) is sufficiently distinguishable from pitch "X" (which indicates air flowing through the device) to indicate a status change.

In the embodiment shown in Figures 1A and 1B, the bead passes the whistle (and may eventually exit the housing completely, unless e.g. an airstone is employed on the housing exhaust end) resulting in a momentary change in the tone pitch from "X" to "Y". Once the bead passes the whistle, the tone pitch reverts substantially to "X"; even though the fibre unit to which the bead is attached is now proximate to the whistle tongue/aperture, the difference from frequency "X" is expected to be slight which will thus be resolved to be equivalent to "X".

This change in the tones "X to Y to X" is a specific signature created by, and unambiguously represents, the arrival of the fibre bead, which can be easily detected by the microphone. The skilled person may also design the sensor device so that the bead's travel terminates proximate to the whistle so that the tone change from "X" to "Y" persists for the duration of the flow of air.

The tone "Y" and/or the tone signature "X to Y to X" is amplified where necessary, detected by the microphone and sent to the operator at the head end, as a status signal (28) that the fibre unit has arrived and that the installation is complete.

As the skilled person would be aware, the components of the sensor device can be used in various combinations and can be substituted by various other components. Some exemplary alternative embodiments will now be discussed.

Figures 2A to 2C and 3A, 3B show embodiments of the invention wherein fibre unit arrival is not indicated by the tone pitch change or the tone signature discussed above, but by the cessation of any detected tone, substantially tone "X". This is obtained by disrupting the airflow so as to reduce or prevent a resonant oscillation from being created by the whistle arrangement. The resulting cessation of tone "X" (where the resulting absence of a tone may include some background noise, as noted above) is detected by the microphone as status 0, which status information can be transmitted to the operator at the head end to indicate fibre unit arrival. It may be that the first embodiment of the invention discussed against Figure 1 is a more robust implementation as detection of a distinct tone is less prone to ambiguity than trying to identify "no tone", particularly if background noise is high. Nonetheless, embodiments where detection of status 0 may be useful in various other contexts.

A first version of such a sensor device, depicted in Figures 2A and 2B, includes a ring, a torus, or other component (40) arranged to form a throat along the interior of the tubular housing (20). The purpose of the throat is to reduce the diameter of the housing interior to halt the progress of the bead within the sensor device. The ring is positioned further from the housing airflow exit end than the whistle arrangement (26). The typical diameter of a bead used by the applicants is about 3mm for small size fibre units up to 6mm or more for larger fibre units, and so the throat is dimensioned to be smaller than these diameters, e.g. 2mm for small size fibre units, but not so small that the airflow is significantly impeded before the fibre unit arrives at the far end, as shown in Figure 2A.

When the fibre unit arrives and enters the sensor device housing, the bead advances towards the throat because of the air drag on the fibre unit inside the conduit, caused by the air flow therein. Helped by the angled cross-sectional configuration of the ring shown in Figure 2C (being the section along A-A of the ring (40) of Figure 2B), the bead will lodge itself into the hole of the ring, as depicted in Figure 2B. With the bead in that position and blocking all or most of the passageway hole of the ring, air cannot travel beyond that point. The airflow to the whistle arrangement stops or is substantially impeded. With the interior of the housing at the airflow exit end being substantially open to atmosphere, the bead is likely to be retained in the hole of the ring after becoming lodged there, owing to the increasing air pressure on the side of the ring where the bead is blocking the airflow passage.

As a result of the above, the previously continuous whistle tone "X" stops. Preferably, the device is engineered so that the stop is relatively sudden. This status change to 0 is detected by the microphone (22), which again can be reported back to the operator at the head end as an indication that the fibre unit has arrived at the remote end of the installation. At this stage, the installation process can be terminated by the operator manually turning off the air compressor and the blowing head, or else the session can be automatically terminated as discussed below in connection with Figure 4.

Design variations of this embodiment within the scope of the invention will be apparent to the skilled person: for example, it is not necessary for the passageway hole or the throat to be located at the central axis of the housing as shown.

Another exemplary embodiment is shown in Figures 3A and 3B. Here, instead of a ring, the sensor device includes a funnel (52), which again narrows the passageway to a throat within the housing, which blocks the progress of the bead in such a way as to block air flowing beyond the throat. The angle of taper of the funnel is preferably shallow to cause minimal disruption of the air flow into the narrow exit channel. The whistle is again located beyond the throat, and without a flow of air, it falls substantially silent, and the previously continuous tone "X" ceases as the bead becomes embedded in the throat of the funnel.

Again, the skilled person may notice a number of design variations of this embodiment within the scope of the invention: for example, the throat, or constriction necessary to catch and retain the bead, may be configured to open out again in the direction of the device housing end.

Figure 4 depicts the main apparatus components located at the head end of the optical fibre conduit or tube, where the operator is located. There, he operates a blowing head which controls the forces propelling an optical fibre unit (2) into the conduit or tube (4), which forces comprise a pair of drive wheels (6) and a supply of pressurised air (8) typically from a compressor. The drive wheels mechanically drive the fibre unit into the tube, while the compressed air is fed into the conduit to create within it the laminar air flow which will bear the fibre unit along and through the tube.

When the fibre unit arrives at the remote end and the bead embeds itself into the throat of the housing, an air flow monitor (9) installed at the head end in a preferred implementation, will reflect the flow decrease resulting from the reduction or prevention of flow from the sensor device.

The blowing head may be capable of detecting that the fibre unit is no longer progressing through the tube - which could be a result of the fibre arriving at the remote end, or else it is otherwise caught or stuck within the tube. In response, the blowing head stops the drive wheels from further pushing the fibre unit into the tube.

The receipt (or non-receipt) of confirmation that the fibre bead has arrived at the remote end via the radio receiver (5) allows the operator to decide what to do next: to end the successful installation, or else to take remedial action. The reading from the air flow meter provides yet further confirmatory information about fibre unit arrival.

In a preferred embodiment, the head end apparatus (in the main, the blowing head and the air compressor) is configured to respond (7) to the receipt of a signal indicative of fibre arrival at the remote end, by terminating the installation session e.g. by turning themselves off, or going into a standby mode. There is a particular synergy in doing so in the case of the blowing head, due to this component's already-existing capability to sense lack of further progress of the fibre within the tube: receipt of the fibre arrival signal confirms the cause of the lack of fibre progress. Similarly, the apparatus at the head end could be configured to respond to the initial signal that air is flowing from the remote end conduit, by automatically starting the fibre installation process.

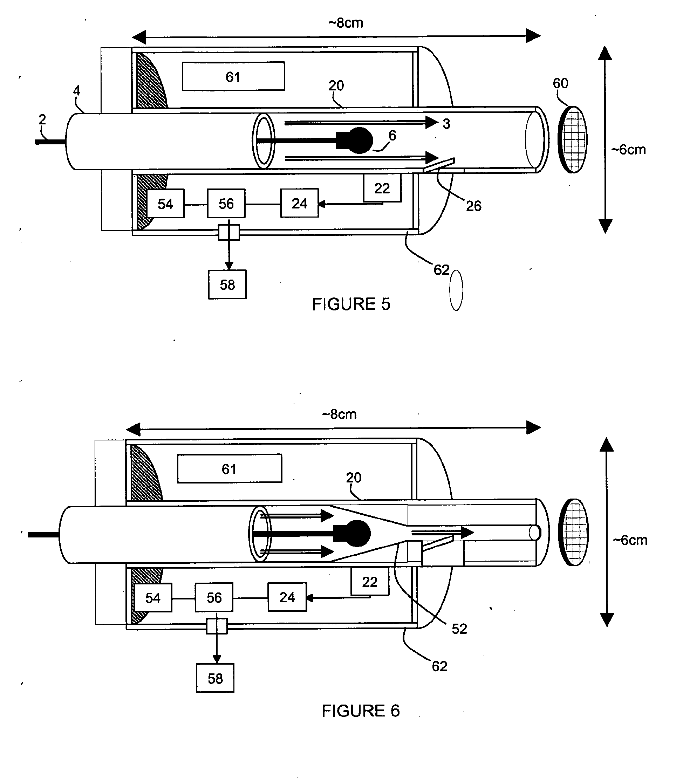

Figures 5 to 7 depict two embodiments of the full enclosure surrounding the device, which may be about 8cm long and 6cm wide for use with a conduit having an external diameter of typically 3mm in the case of small-bore conduits, up to 15mm and more for large bore conduits. In a preferred embodiment the coupling flange fixed to the enclosure may be adjustable to tightly fit the conduit in use, or the coupling flange may be removable from the enclosure whereupon the correct sized flange for the conduit in use is selected and attached to the enclosure. In either case the flange ensures mechanically robust and substantially air tight coupling between the enclosure and the conduit.

In Figure 5, the device comprises two injection moulded plastic sections: the inner tubular housing (20) of the embodiments discussed above, and an outer enclosure (62). A fine gauze dust shield (60) is optionally provided on the exit end of the sensor device housing to prevent or discourage contamination of the interior of the device; it is also useful to detail the further progress of the fibre unit beyond the housing, but is essential to the working of the invention. The outer enclosure is configured to avoid the whistle assembly so that the air may flow directly to atmosphere from the whistle aperture. Once assembled, the only service-removable part is the battery cover protecting the dry cell battery (61) on the outer enclosure surface. Should it be found desirable to replace the dust shield, then this too could be made to be service-removable. A minimal number of service-removable parts is however advantageous for easy maintenance.

An internal antenna (54) used for transmitting RF signals about air and fibre arrival to the head end, may be incorporated within the enclosure, or alternatively an external antenna (58) could be used for greater range/gain in operational situations where radio reception may be impaired (e.g. down a manhole). Ideally, the fibre conduit at the remote end is long enough to extend the fibre conduit route to ground/surface level for the purposes of the installation process, in which case radio reception is improved and a reliable channel may be established with the head end operator. Should there be insufficient length of conduit, a bridging length of dummy conduit can be temporarily attached for purposes of the installation.

Figure 6 shows the outer enclosure (62) used with a sensor device of the embodiment discussed in connection with Figure 3.

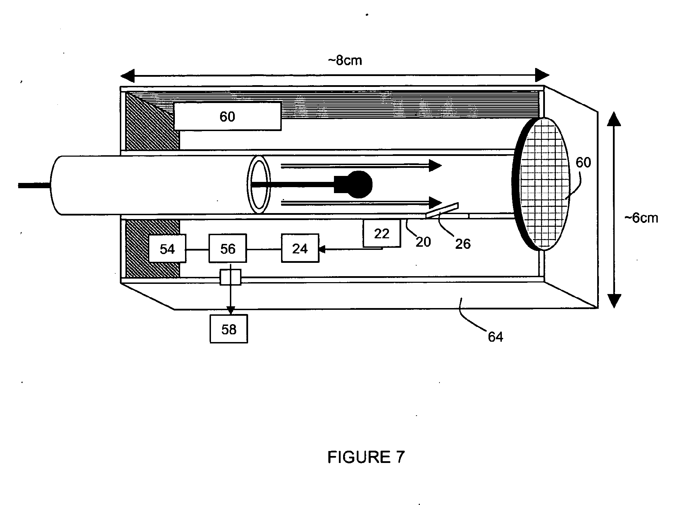

Figure 7 shows an alternative outer enclosure (64) consisting a simple injection-moulded box. In this implementation, the inner sensor device housing (20) is completely protected. All the other elements of the device can be enclosed, even the whistle assembly (26), although the gauze dust shield (60) is ideally configured to allow for sufficient airflow through the conduit and out of the device for the purposes of the blown fibre installation session.

The methods, devices, components and configurations described above and in the drawings are for ease of description only and not meant to restrict the invention to any particular embodiments. Various sequences and permutations on the methods and devices described are possible within the scope of this invention as disclosed; similarly the invention could be used in various similar scenarios and for various cable and conduit types and sizes. In particular, the apparatus and methods relating to airflow detection and the methods and apparatus relating to fibre arrival detection are depicted in this description to be used together in a preferred embodiment. However they will work independently of each other on their own.

## Claims

1. A device for use with a conduit having a first conduit end and a conduit second end, into which conduit a cable can be installed using a flow of air into the first conduit end, the device being suitable for confirming that the air is flowing out from the second conduit end, the device comprising
- a housing,
- means to enable connection of the device to the second conduit end,
- a detector arranged to detect an acoustic property change caused by generation of a tone having a first pitch, and
- an actuator for causing the acoustic property change detectable by the detector,
wherein in use, a change in the flow of air causes the actuator to generate an acoustic property change detectable by the detector.

2. A device according to claim 1 wherein the actuator comprises means to introduce turbulence in the flow of air, and wherein the detector comprises a vibration detector connected to a transmitter for transmitting a signal comprising the detected tones.

3. A device according to claim 1 or claim 2 wherein the actuator is arranged to generate an ultrasonic tone.

4. A device according to any preceding claim further being suitable for confirming that the cable has arrived at the second conduit end, wherein the actuator is arranged to cause a further acoustic property change in reaction to passage or presence of a bead connected to the cable in the flow of air.

5. A device according to claim 4 wherein the further acoustic property change comprises a change from the tone having the first pitch to a tone having a second pitch.

6. A device according to claim 4 wherein the further acoustic property change comprises a change from the tone having the first pitch to silence.

7. A device according to claim 6 further comprising means to form a constricted passageway within the housing, wherein in use, the bead substantially blocks the constricted passageway.

8. A device according to claim 7 wherein the means to form the constricted passageway comprises a ring.

9. A device according to claim 7 wherein the constricted passageway comprises a tapered funnel.

10. A system for use with a conduit having a first conduit end and a conduit second end, into which conduit a cable can be installed using a flow of air into the first conduit end, comprising a device for confirming that the air is flowing out from the second conduit end according to any preceding claim.

11. A system according to claim 10 including a device of any one of claims 2 to 9, wherein apparatus at the first conduit end is configured to receive and to respond to the transmitted signal comprising the detected tones.

12. A system according to claim 10 or claim 11 further including an air flow meter at the first conduit end.

13. A method for use with a conduit having a first conduit end and a conduit second end, into which conduit a cable can be installed using a flow of air into the first conduit end, and to confirm that the air is flowing out from the second conduit end, the method comprising
- attaching a device of any one of claims 1 to 9 to the second conduit end,
- applying the flow of air into the first conduit end,
- causing a acoustic property change, and
- detecting the acoustic property change.

14. A method according to claim 13 using the device of any one of claims 2 to 9, further including the step of transmitting a signal comprising the detected tones.

15. A method according to claim 13 or claim 14 to further confirm that the cable has arrived at the second conduit end, including
- connecting a bead to an end of the cable,
- installing the end of the cable into the first conduit end, and
- causing a further acoustic property change detected by the detector.

16. A method according to claim 15 further including
- transmitting a signal comprising the further detected tones to apparatus located at the first conduit end, and
- causing the apparatus at the first conduit end to respond to the transmitted signal.

17. A method according to claim 15 or claim 16 wherein the step of causing the further acoustic property changes comprises changing from the tone having the first pitch to a tone having a second pitch.

18. A method according to claim 15 or claim 16 wherein the step of causing the further acoustic property changes comprises changing from the tone having the first pitch to silence.
